# EUROPEAN PATENT APPLICATION

(11) **EP 3 757 062 A1**
(43) Date of publication of application: **30.12.2020**
(21) Application number: 19305838.5
(22) Date of filing: 25.06.2019
(51) Int. Cl.: B82Y 35/00, G01G 3/13, G01N 29/02, G01N 29/036, G01N 29/22, H01M 10/052, H01M 10/48, H01M 4/13

(54) **TEST CELL FOR THE EQCM CHARACTERIZATION OF ELECTROCHEMICAL SYSTEMS, AND METHOD FOR THE EQCM CHARACTERIZATION OF ELECTROCHEMICAL SYSTEMS**

(71) Applicant: Centre National de la Recherche Scientifique, 75016 Paris (FR); College de France, 75005 Paris (FR); SORBONNE UNIVERSITE, 75006 Paris (FR)
(72) Inventor: ALVES DALLA CORTE, Daniel, 94120 FONTENAY SOUS BOIS (FR); LUTZ, Lucas, 73527 Schwäbisch Gmünd (DE); LEMAIRE, Pierre, 92100 BOULOGNE BILLANCOURT (FR); DARGON, Thomas, 75017 PARIS (FR)
(74) Representative: Marks & Clerk France

(57) **Abstract**

The invention relates to a test cell for the EQCM - Electrochemical Quartz Crystal Microbalance- characterization of an electrochemical system comprising a liquid electrolyte, characterized in that said test cell comprises:
- a cell body (10) comprising a first through-opening (11) extending through the cell body (10) along a predefined axis Z, said first through-opening (11) being intended to host the electrolyte, the cell body (10) comprising also a first electrode of the electrochemical system, called working electrode (13), and a quartz resonator (12) at an end of the first through-opening (11), the quartz resonator (12) being intended to support said working electrode (13), the quartz resonator (12) being configured for providing a signal function of a mass variation of the working electrode (13),
- a cell basis (20), configured to be assembled with the cell body (10) along axis Z, and comprising a laterally arranged connecting terminal (22), said connecting terminal (22) being electrically connectable to the quartz resonator (12) for receiving the signal from the quartz resonator (12),
- a cell hood (30), configured to be assembled with the cell body (10) along axis Z, comprising a second through-opening (31) extending through the cell hood (30) substantially along the axis Z, and a second electrode of the electrochemical system, called counter-electrode, said second through-opening (31) being intended to host the counter-electrode (32),
- at least one O-ring-seal (50, 51, 52, 53), said O-ring-seal (50, 51, 52, 53) being arranged at an edge of the cell body (10) and/or cell basis (20) and/or cell hood (30), in a plane normal to axis Z.

## Description

### Technical field :

The invention relates to the field of characterization of electrochemical systems. The invention is particularly adapted for experimental analysis of electrochemical systems/cells, such as rechargeable batteries or non-rechargeable batteries.

### Background :

The different technologies of electric energy storage have recently been subject to extensive searches, in several application fields, for example transportation (electrical vehicles) and wearable electronic devices. Therefore, there is a constant need to develop and to test new materials or new assemblies for the electrodes or for the electrolyte of the battery.

In particular, lithium batteries meet the requirements of the aforementioned applications fields, because of their high energetic density. Many laboratory researches currently focus on the lithium-ion technology (Li-ion), so as to increase autonomy, lifetime, security or miniaturization demands of the embedded applications.

However, lithium is a pyrophoric product, i.e. it is capable of igniting spontaneously at a comparatively low temperature, and its combustion may trigger toxic smoke emanations. Moreover, the performance behavior of Li-ion batteries (and their characterization) is highly influenced by the operating conditions. At least for these two reasons, it is required, for laboratory work, to use a glove box under controlled rare gas atmosphere (argon), with an oxygen and moisture level inferior to a predefined threshold, about 1 ppm.

Working in a glove box yields a high investment cost in comparison to other energy storage technologies (e.g., lead acid and nickel metal hydride (NiMH) batteries):
even after the assembly of the battery, whenever a characterization of a battery has to be done, the laboratory technician uses the glove box, which is a costly equipment. Laboratories may be equipped with several glove boxes, so as to make extended tests on several batteries.

The Electrochemical Quartz Crystal Microbalance (EQCM) technique is a common tool, with a very high accuracy, for the characterization of electrochemical systems.

An EQCM is a device capable of measuring a mass variation by using a resonance generated by the piezoelectric effect of a quartz crystal. The EQCM has a pair of electrodes, and a crystal resonator, usually made from quartz, which supports one of the electrodes, called working electrode, where the mass variation is probed. The working electrode may be formed by coating metal on the surface of the quartz resonator.

The EQCM also comprises:
- a potentiostat which generates a DC voltage, which corresponds to the reaction potential of the electrolyte solution, and which applies a stabilized signal voltage to the electrolyte,
- an oscillating circuit for selecting a desired frequency and oscillating at said desired frequency,
- a frequency counter for measuring a frequency change occurring on the working electrode,
- a processing unit for processing the output digital signals,
- a PC for controlling the potentiostat, for acquiring the current and voltage provided by the potentiostat, and for acquiring the frequency from the frequency counter.

When a voltage is applied between the electrodes (battery is charging),. the value of the resonance frequency varies due to the variation of the mass of the working electrode.

The amount of the substance to be precipitated on the working electrode, and therefore the mass of the working electrode, is calculated by initially measuring the resonance frequency of the initial quartz crystal and the lowering of the resonance frequency crystal after deposition of the substance implied in the electrochemical reaction.

An introduction to the EQCM technique is disclosed in the document *"*The EQCM: electrogravimetry with a light touch" (A. Robert Hillman, J Solid State Electrochem (2011).

It is known, from the document *"*In-situ EQCM Study Examining Irreversible Changes the Sulfur-Carbon Cathode in Lithium-Sulfur Batteries" and supporting information (H.-L. Wu et al., ACS Applied Materials and Interfaces, 7 (37) 20820-20828 (2015)), an EQCM cell. The cell is partially filled with a liquid electrolyte. A working electrode (the crystal of the EQCM), a counter electrode (a Li foil) and a reference electrode are immersed in the electrolyte. The cell is maintained under a positive pressure of Argon, so as to avoid any air inlet. The cell includes a circuit for circulating water around the cell for temperature regulation. The water inlet and outlet, as well as the argon inlet and outlet, are arranged laterally. The electrodes are immersed in the electrolyte from a superior surface of the cell. The disclosed EQCM cell is not satisfactory. Firstly, the design of the cell does not reproduce the arrangement of the battery in operational conditions: in the cell, the electrodes are arranged side by side (immersed from the top of the cell), whereas, in operational conditions, the electrodes face each other with a minimal distance in between the electrodes. Secondly, the argon and water circuits make the cell cumbersome: whenever the laboratory technician moves the cell, for example to bring it back into the glove box, he must also move the argon and water sources. Lastly, the disclosed cell requires a large quantity of electrolyte, so that the electrodes may be immersed, which is not optimized.

It is also known, from the document *"*Operando EQCM-D with Simultaneous in Situ EIS: New Insights into Interphase Formation in Li Ion Batteries" (P.G. Kitz et al. Analytical Chemistry, 91 2296-2303 (2019)), a cell which combines EIS (Electrochemical Impedance Spectroscopy) and multiharmonic EQCM-D (EQCM with dissipation monitoring) functions, in a coin-cell-type Li-ion cell configuration. In the cell, the electrodes are arranged one to the other in a realistic configuration.

However, the disclosed cell is not hermetically sealed, so that it cannot be taken out from a protected atmosphere (glove box).

Therefore, there is a need to overcome the aforementioned drawbacks. In particular, there is a need to accurately and securely characterize electrode materials of electrochemical systems, particularly by using a small volume of electrolyte, having electrodes positioned close to each other, out from the glove box.

### Summary :

It is proposed, according to one aspect of the invention, a test cell for the EQCM - Electrochemical Quartz Crystal Microbalance- characterization of an electrochemical system comprising a liquid electrolyte, characterized in that said test cell comprises:
- a cell body comprising a first through-opening extending through the cell body along a predefined axis Z, said first through-opening being intended to host the electrolyte, the cell body comprising also a first electrode of the electrochemical system, called working electrode, and a quartz resonator at an end of the first through-opening, the quartz resonator being intended to support said working electrode, the quartz resonator being configured for providing a signal function of a mass variation of the working electrode,
- a cell basis, configured to be assembled with the cell body along axis Z, and comprising a laterally arranged connecting terminal, said connecting terminal being electrically connectable to the quartz resonator for receiving the signal from the quartz resonator,
- a cell hood, configured to be assembled with the cell body along axis Z, comprising a second through-opening extending through the cell hood substantially along the axis Z, and a second electrode of the electrochemical system, called counter-electrode, said second through-opening being intended to host the counter-electrode.

In a preferred embodiment, each of the cell body, the cell basis and the cell hood comprise a plurality of alignment elements, the cell hood and the cell basis comprising an annular lip around a surface facing the cell body in an assembled state, said alignment elements being configured so that the first through-opening and the second through-opening face each other when the cell body, the cell basis and the cell hood are in an assembled configuration, the cell body, the cell basis and the cell hood being configured be sealed one above the other by means of the alignment elements so as to avoid any leakage of the liquid electrolyte out from the first through-opening.

In a preferred embodiment, the alignment elements of the cell body comprise a plurality of hollow pads substantially along the axis Z on both sides of the cell body, the alignment elements of the cell basis and the alignment elements of the cell hood comprising holes, the hollow pads and the holes being configured to interlock with one another.

In a preferred embodiment, the cell body comprises a recess configured for hosting the quartz resonator, and comprising a mask, said quartz resonator being maintained in the recess by means of the mask, said mask covering partially the surface of the recess so as to leave an uncovered surface for establishing an electrical contact between the quartz resonator and the connecting terminal of the cell basis through contact pins, said contacts pins protruding out from the cell basis along the axis Z.

In a preferred embodiment, at least one among the cell body, the cell basis and the cell hood comprises a material selected from a group comprising polyetherimide (PEI), polypropylene (PP), polyether ether ketone (PEEK), polytetrafluoroethylene (PTFE), aluminium and stainless steel.

In a preferred embodiment, the cell hood comprises a light transparent window, said light transparent window being positioned so as to illuminate the working electrode with a light beam.

In a preferred embodiment, the test cell comprises an auxiliary electrode, wherein a lateral through-opening is arranged in a side wall of the cell body, said lateral through-opening extending normally to the axis Z, and being configured to host said auxiliary electrode.

In a preferred embodiment, the test cell comprises a threaded ferrule configured to be screwed in the second through-opening, a sealing gasket being arranged in said threaded ferrule so as to lock the displacement of the counter-electrode by screwing the ferrule in the second through-opening.

In a preferred embodiment, the cell hood comprises a chimney extending along axis Z, said chimney and the second through-opening being configured to host an aqueous electrolyte.

In a preferred embodiment, the cell body is made of metal, the cell body being connected to a temperature regulating device.

In a preferred embodiment, the cell body, the cell basis and the cell hood have a square or a rectangular cross section along axis Z.

In a preferred embodiment, the test cell comprises at least one O-ring-seal, said O-ring-seal being arranged at an edge of the cell body and/or cell basis and/or cell hood, in a plane normal to axis Z.

In a preferred embodiment, the O-ring-seal comprises a material selected from a group comprising nitrile, polytetrafluoroethylene (PTFE) or perfluoro rubber.

In a preferred embodiment, a first O-ring-seal is arranged so as so closely surround an extremal part of the first through-opening, opposite to the quartz resonator.

In a preferred embodiment, a second O-ring-seal is arranged substantially on the inner circumference of an end surface of the cell basis, so that when the cell basis and the cell body are assembled, the second O-ring-seal contacts the cell body.

In a preferred embodiment, a third O-ring-seal is interposed between the quartz resonator and the mask.

In a preferred embodiment, a fourth O-ring-seal is arranged around the working electrode.

The invention also relates to an EQCM system, comprising a predefined test cell according to any of the preceding claims, a frequency counter connected to the connecting terminal, and a potentiostat configured for controlling and measuring the voltage difference between the counter-electrode and the quartz resonator supporting the working electrode.

The invention also relates to Method for the EQCM - Electrochemical Quartz Crystal Microbalance- characterization of an electrochemical system by using the predefined EQCM system, characterized in that said method comprises the following steps:
a) deposing the working electrode on the quartz resonator;
b) placing the quartz resonator and the working electrode in the cell body;
c) assembling the cell body and the cell basis;
d) introducing the liquid electrolyte in the first through-opening;
d) inserting the counter-electrode in the second through-opening, then assembling the cell body and the cell hood, or inversely;
e) controlling and measuring the voltage difference between the counter-electrode and the working electrode, and measuring a signal function of a mass variation of the working electrode.

In a preferred embodiment, step e) comprises a sub-step of adjusting the height of the counter-electrode in the second through-opening so that the counter-electrode contacts the liquid electrolyte.

In a preferred embodiment, the method comprises a step of introducing the auxiliary electrode into the auxiliary channel, said step being executed between steps c) and d).

### Brief description of the drawings :

The accompanying drawings, which are incorporated in and constitute a part of this specification, illustrate various embodiments of the invention and, together with the general description of the invention given above, and the detailed description of the embodiments given below, serve to explain the embodiments of the invention:
Figures 1 illustrates an exploded view and an assembled view of the test cell.
Figure 2 illustrates an exploded, a semi-exploded and an assembled view of the body cell, from the bottom.
Figure 3 illustrates a cross view of the cell with an auxiliary electrode.
Figure 4 illustrates the test cell with an optical window.
Figure 5 and 6 illustrate the test cell with a chimney, for hosting an aqueous electrolyte.
Figure 7 is a diagram representing the steps of the method for the EQCM characterization of an electrochemical system according the invention.

### Detailed description:

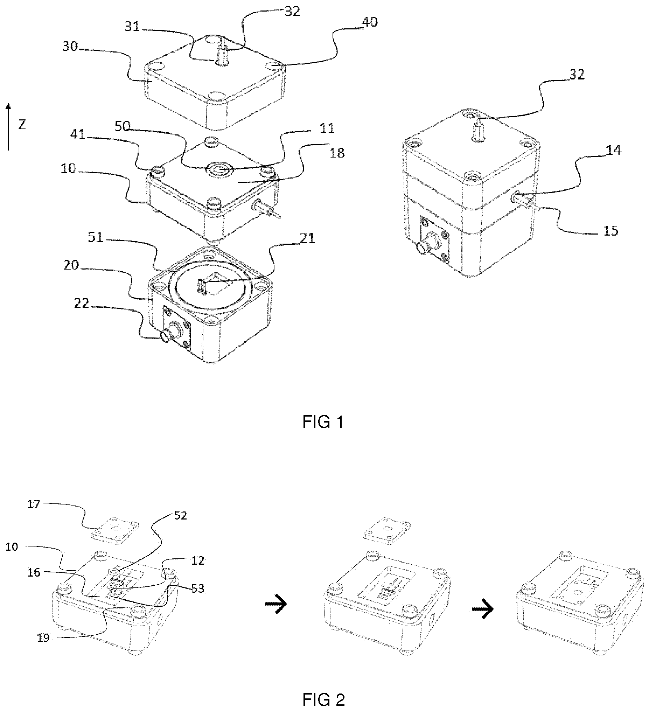

Figures 1 illustrates an exploded view on the left side of the figure, and an assembled view of the test cell on the right side of the figure. The test cell is made of three blocks: the cell body 10, the cell basis 20 and the cell hood 30. The three blocks can be assembled one with each other along axis Z, so that the cell basis 20 is sandwiched between the cell basis 20 and the cell hood 30 in an assembled state. In a preferred embodiment, the cell body 10 has an upper surface and a lower surface which are complementary respectively to the lower surface of the cell hood 30 and to the upper surface of the cell basis 20. In the present application, the terms "lower" and "upper" refer to the axis Z: along axis Z, it is considered that the cell basis 20 is below the cell body 10, which in turn is located below the cell hood 30.

By "complementary", it is meant that there is no free space between the blocks in an assembled state. In a preferred embodiment, the upper surface and the lower surface of the cell body 10 are plane and smooth, and the lower surface of the cell hood 30 and to the upper surface of the cell basis 20 are also plane and smooth. Therefore, the cleaning of the blocks, after the characterization operations of the electrochemical system, is facilitated. The surfaces which are in contact one with each other may be plane and smooth, but it is not essential; for example, complementary patterns could be implemented on the surfaces.

There is no particular requirement concerning the shape of the upper surface of the cell hood 30 and the shape of the lower surface of the cell basis 20. The lower surface of the cell basis 20 can be plane so as to facilitate the deposition of the test cell on the laboratory bench during the manipulation operations, inside the glove box or outside of it.

The cell body 10 comprises a first through-opening 11 which extends through all the cell body 10. The first through-opening 11 is intended to host the electrolyte of the electrochemical system. The volume of the first through-opening 11 can be very limited, so as to use a very small quantity of electrolyte (in particular of organic electrolyte). A quartz resonator 12 is arranged at an end (the lower end) of the first through-opening 11. The quartz resonator 12 supports a first electrode 13 of the electrochemical system which is to be tested. By convention, the first electrode 13 is called working-electrode 13. The working-electrode 13 is deposited on the quartz resonator 12.

The quartz resonator 12 can generate a signal function of the mass variation of the working electrode 13.

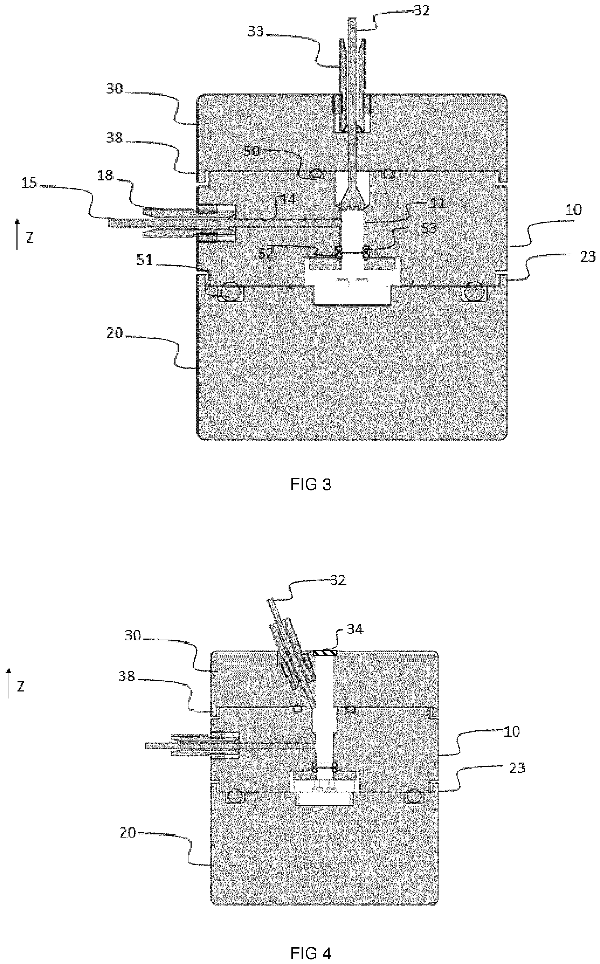

A second electrode of the electrochemical system, called counter-electrode 32, is inserted in a second through-opening 31 which is arranged through the cell hood 30, along axis Z. As it can be illustrated in the cross view of figure 3, the second through-opening 31 and the first through-opening 11 face each other when the cell hood 30 and the cell body 10 face each other. In that way, the liquid electrolyte is maintained between the working electrode 13 and the counter-electrode 32.

The counter-electrode can be positioned at any position along axis Z inside the through-opening 11. The volume of electrolyte necessary for the electrochemical test can be drastically reduced by decreasing the distance between working and counter electrodes by positioning the counter-electrode 32 very close to the working-electrode 13.

A connecting terminal 22 is arranged on the side of the cell basis 20, i.e. on a plane which is parallel to axis Z. The connecting terminal 22 can be a coaxial port; other types of terminals can be considered. The connecting terminal 22 is connected to the quartz resonator 12, when the blocks are assembled. Therefore, the signal function of the mass variation of the working electrode 13 can be transmitted to a frequency counter for determining the oscillation frequency of the quartz resonator 12, and to a potentiostat for controlling and measuring the voltage difference between the counter-electrode 32 and the working electrode 13. Then, a computing unit characterizes the electrochemical system based on the acquired data.

As illustrated on figure 1, the cell body 10, the cell basis 20 and the cell hood 30 comprise a plurality of alignment elements 40, 41. Thanks to the alignment elements 40, 41, the three blocks which constitute the test cell are aligned one with each other, and both through-openings as well. Moreover, when the blocks are aligned, the quartz resonator 12 indirectly contacts the connecting terminal 22 through contacts pins 21 protruding out from the cell basis 20 along the axis Z.

In a preferred embodiment, the alignment elements 40, 41 comprise a plurality of hollow pads 41 and holes 40 along axis Z. Each of the blocks has at least two alignment elements 40, 41, so as to avoid any rotation of a block with respect to the others, in a plane which is normal to axis Z. Of course, more than two alignment elements 40, 41 can be arranged in each block, in order to increase the accuracy of the alignment.

Furthermore, the alignment elements 40, 41 can also be used so as to fix the cell body 10, the cell basis 20 and the cell hood 30 one with each other. In a preferred embodiment, the cell body 10 comprises a plurality of hollow pads 41 which protrude out of the lower and upper surface of the cell body 10 along axis Z. The alignment elements of the cell basis 20 and the alignment elements of the cell hood 30 can be holes 40 which can interlock with the hollow pads 41 in an assembled position of the test cell. An annular lip 38 may be arranged in the lower surface of the cell hood 30. The upper surface of the cell body 10, which is to be assembled with the cell hood 30, has an annular recess which fits the annular lip 38. Similarly, an annular lip 23 may be arranged in the upper surface of the cell basis 20. The lower surface of the cell body 10, which is to be assembled with the cell basis 20, has an annular recess which fits the annular lip 23. The annular lips (23, 38) and the corresponding recesses have the function of aligning the cell for the assembling but also for preventing the bottom surface, at any part of it, to touch dirty surfaces (lab bench, glove-box floor, etc) and accumulate dust on the area that will be in contact with the o-ring, when the cell is closed.

Moreover, thanks to the protrusion of the hollow pads 41, the user can lay the cell body 10 on the benchtop of the glovebox without risk of dirtying the upper and lower surfaces of the cell body 10.

Preferentially, the alignment elements 40, 41 are disposed close to the edge of the blocks. For example, if the blocks are square-shaped, the alignment elements 40, 41 may be positioned in each corner.

A recess 16 is arranged in the lower surface of the cell body 10, for hosting the quartz resonator 12, as illustrated in figure 2. The recess 16 may be arranged so as to exactly match the shape of the quartz resonator 12. Therefore, the recess 16 may have a complex 3D shape, which would be adapted to a certain type of quartz resonator. The quartz resonators which are generally used for EQCM characterization have either a square-shaped quartz, or a circular-shaped quartz, each of them having different configuration of electrical connections. The test cell according to the invention has a modular structure. Therefore, if either of a square-shaped quartz or a circular-shaped quartz has to be employed, only the cell body 10 has to be adapted to the quartz resonator 12; the cell basis 20 and the cell hood 30 may be used regardless of the quartz resonator 12.

The quartz resonator 12 is maintained in the recess 16 by means of a mask 17. The mask 17 is a plate which covers the recess 16. The mask 17 is fixed to the cell body 10 thanks to screwing means, which are not illustrated on figure 2. The coverage of the recess 16 by the mask 17 is partial. Indeed, the pins of the quartz resonator 12 must be in electrical contact with the connecting terminal 22. For that, contact pins 21 protrude out from the cell basis, as illustrated on figure 1. The contact pins 21 may be retractable along axis Z. For example, the contact pins 21 may be telescopic. Therefore, the electrical contact between the contact pins 21 and the pins of the quartz resonator 12 is ensured.

In a preferred embodiment, the counter-electrode 32, is maintained in the second through-opening 31 by means of a threaded ferrule 33, as illustrated by figure 3, which represents a cross view of the test cell. Before assembling the cell hood 30 with the cell body 10, the user inserts the counter-electrode 32 in the threaded ferrule 33. The threaded ferrule 33 is not tightly screwed in the cell hood 30, which enables the user to adjust the height of the counter-electrode 32 in the second through-opening 31. Thus, the user can adapt the height of the counter-electrode 32 to the volume of liquid electrolyte, which ensures that only a small quantity of liquid electrolyte can be used, compared to state-of-the-art test cells. Then, the user screws the threaded ferrule 33, which prevents any movement of the counter-electrode 32, and which also prevents any leakage of the liquid electrolyte in the second through-opening 31.

As illustrated by figure 3, the diameter of the second through-opening 31 is not constant along axis Z. In particular, the second through-opening 31 has a first section which has a diameter which matches with the external diameter of the threaded ferrule 33. Then, a second section of the second through-opening 31 has a diameter which corresponds to the diameter of a first part of the counter-electrode 32.

Lastly, a third section of the second through-opening 31 has a diameter which corresponds to the diameter of a second part of the counter-electrode 32, which is in contact with the liquid electrolyte.

In a preferred embodiment, the test cell comprises an auxiliary electrode 15, also called reference-electrode, which is depicted on figures 1, 3 and 4. The auxiliary electrode 15, can be, for example, a pseudo-reference electrode, or a Luggin capillary. A potential between the counter-electrode 32 and the auxiliary electrode 15 can be measured and controlled, as well as a potential between the working electrode 13 and the auxiliary electrode 15. Therefore, the accuracy of the electrical measures is improved.

A lateral through-opening 14 is arranged in a side wall of the cell body 10, and extends normally to the axis Z. In the same way as for the counter electrode 32, the auxiliary electrode 15 may be maintained in the lateral through-opening 14 by means of a threaded ferrule 18. Before assembling the cell hood 30 with the cell body 10, the user inserts the auxiliary electrode 15 in the threaded ferrule 18, and adjusts the depth of the auxiliary electrode 15 in the lateral through-opening 14. When the auxiliary electrode 15 has penetrated in the first through-opening 11, the user can screw the threaded ferrule 18, which also seals the lateral through-opening 14 relative to the liquid electrolyte. As illustrated by figure 3, the liquid electrolyte is located is an internal cavity which is delimited by the end of the working electrode 13 and by the end of the counter electrode 32. The internal cavity has a very reduced volume. Therefore, a very small quantity of liquid electrolyte is needed, which limits the cost of the experimentation.

In a preferred embodiment, at least one among the cell body 10, the cell basis 20 and the cell hood 30 comprises a material selected from a group comprising polyetherimide (PEI), polypropylene (PP), polyether ether ketone (PEEK), polytetrafluoroethylene (PTFE), aluminium and stainless steel. Organic solvents which are employed in organic electrolytes can be very corrosive; these materials are resistant to organic solvents. The blocks may be made of different materials one compared to the others (for example the cell body 10 comprises PEI, the cell basis 20 comprises PP, and the cell hood 30 comprises PEEK). However, using the same materials for the three blocs imparts a chemical resistance to the test cell.

As an alternative, the cell body 10 may be made of metal, and may be connected to a temperature regulating device (which is not illustrated on the figures). The temperature regulating device may be embedded in the cell body 10, or may be an external component. As the resonant frequency of the quartz is strongly dependent on the temperature variation, the temperature regulating device allows to keep the temperature of the quartz constant, in order to increase the accuracy of the EQCM characterization. Therefore, the test cell according to this embodiment implies no need to characterize the electrochemical system in a thermostated oven (as it is the case for state-of-the-art test cells), since the temperature of the quartz constant is kept constant. Besides, the temperature regulating device allows the user to adjust the temperature of the electrolyte used in the experiment, thus to characterize the electrochemical system with different temperatures.

Since organic electrolytes are very sensitive to air exposure, it is desirable to increase the air tightness of the test cell. For that, O-ring-seals (50, 51, 52, 53), may be are arranged at edges of the cell body 10 and/or cell basis 20 and/or cell hood 30, in a plane normal to axis Z. A first O-ring-seal 50 may be arranged so as so closely surround an extremal part of the first through-opening 11, opposite to the quartz resonator 12, as illustrated by figures 1 and 3. The extremal part of the first through-opening 11 leads to the cell hood 30 in an assembled state of the test cell. The first O-ring-seal 50 may be arranged in a groove which closely surrounds the first through-opening 11. Therefore, when the cell body 10 and the cell hood 30 are assembled, the first O-ring-seal 50 contacts the cell body 10 and the cell hood 30, and avoids any leakage of the liquid electrolyte.

A second O-ring-seal 51 may be arranged substantially on the inner circumference of an end surface of the cell basis 20, which is to be facing the cell body 10 in an assembled state, as illustrated by figures 1 and 3. Therefore, when the cell basis 20 and the cell body 10 are assembled, the second O-ring-seal 51 contacts the cell body 10, and provides tightness between the cell basis 20 and the cell body 10. If the cell basis 20 has a square cross section, the external diameter of the second O-ring-seal 51 may fit with the inner side of the cell basis 20. Thus, any leakage of the liquid electrolyte in the holes 40 is prevented.

A third O-ring-seal 52 may be interposed between the quartz resonator 12 and the mask 17, and a fourth O-ring-seal 53 may be arranged around the working electrode 13, as illustrated by figures 2 and 3. The third O-ring-seal 52 provides tightness between the mask 17 and the quartz resonator 12, and the fourth O-ring-seal 53 provides tightness around the working electrode 13, i.e. enclosing the liquid electrolyte into the cavity 11.

The test cell according to the invention does not necessarily comprise all the aforementioned O-ring-seals.

Advantageously, the first, second, third and/or fourth O-ring-seals comprise a material selected from a group comprising nitrile, polytetrafluoroethylene (PTFE) or perfluoro rubber. These materials confer flexibility to the O-ring-seals, while being resistant to organic solvents.

The O-ring-seals are easy to mount and to remove; therefore, their cleaning is facilitated. Moreover, it is easy to replace a deteriorated O-ring-seal by another one.

Due to the fact that the test cell is hermetically closed when the blocks are assembled with the o-ring-seals, the cell can be used on every possible direction, not only by laying the cell basis 20. This can allow, for example, the use of the test cell sidewise, both the working electrode 13 and the counter electrode 32 being perpendicular to the electrolyte level. This experimental configuration can guarantee that degradation products generated at the counter-electrode 32 will not deposit (fall over) the resonator and interfere on the measurement. By using a test cell which has a square cross section or a rectangular cross section, it is possible to lay the test cell sidewise, except on the side of the connecting terminal 22, and except on the side of the auxiliary electrode 15.

In a preferred embodiment, illustrated by figure 4, the cell hood 30 comprises a light transparent window 34. This embodiment allows the combination of photoelectrochemical and EQCM measurements. There is a slight offset between the transparent window 34 and the first through-opening 11 (inclination of the first through-opening 11 of a few degrees, for example between 5° and 30°, with regard to axis Z), so that the user may visually access and inspect the working electrode 13 with a light beam, or may apply a Raman or infrared spectroscopy on the working electrode 13 with an appropriate light beam. The transparent window is preferably made of quartz. Once the test cell assembled, the transparent window 34 also keeps the test cell hermetically sealed.

In another embodiment (not illustrated), a second quartz resonator is arranged in the cell hood 30, in order to characterize the working electrode 13 and the counter-electrode 32. The second quartz resonator supports the counter-electrode 32. In this configuration, the user should place the cell sidewise; thus, the electrolyte floods both electrodes.

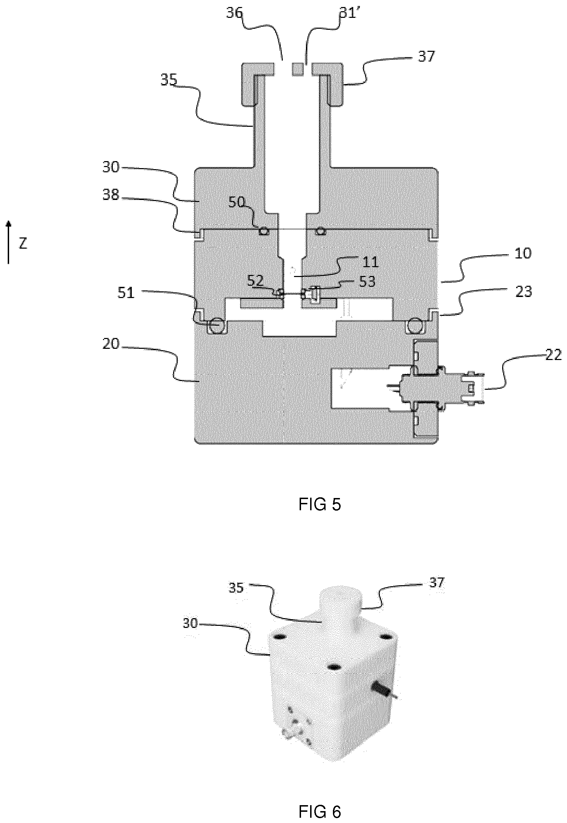

It has been pointed out that the test cell according to the invention is particularly appropriate for the characterization of electrode materials of electrochemical systems comprising an organic electrolyte. Thanks to its modular structure, the test cell may also be adapted to batteries comprising an aqueous electrolyte, as illustrated by figures 5 (cross view) and 6 (perspective view). The cell body 10 and the cell basis 20, for aqueous electrolytes, are the same as for the organic electrolytes. The cell hood 30 comprises a chimney 35, which extends along axis Z, for hosting the aqueous electrolyte. The chimney 35 may be closed by a lid 37. During the experimentation, the user opens the lid 37, pours the aqueous electrolyte in the chimney 35, and closes the lid 37. The cell hood 30 according to this embodiment comprises a second through-opening 31' for inserting the counter-electrode. The second through-opening 31' is arranged in the chimney 35. The chimney 35 not only holds the counter-electrode in the second through-opening 31', but potentially also the auxiliary electrode 15 in another through-opening 36, which is adjacent to the second through-opening 31'. The chimney 35 enlarges the dimensions of the internal cavity, which enables to use a large volume of electrolyte. The characterization of the electrochemical system comprising an aqueous electrolyte does not necessarily have to be done in a hermetic cell. Therefore, the air-tightness of the chimney 35 is not essential. Aside from the cell hood 30, the test cell is compliant with all the aforementioned embodiments.

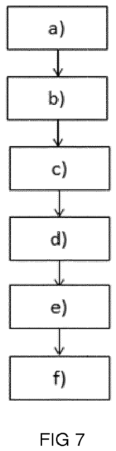

Figure 7 schematically illustrates a method for the EQCM characterization of an electrochemical system. The following steps are implemented:
a) deposing the working electrode 13 on the quartz resonator 12;
b) placing the quartz resonator 12 and the working electrode 13 in the cell body 10;
c) assembling the cell body 10 and the cell basis 20;
d) introducing the liquid electrolyte in the first through-opening 11 ;
e) inserting the counter-electrode 32 in the second through-opening 31, then assembling the cell body 10 and the cell hood 30;
f) controlling and measuring the voltage difference between the counter-electrode 32 and the working electrode 13, and measuring a signal function of a mass variation of the working electrode 13.

Only steps d) and e) have to be implemented in a glove box. The other steps may be implemented outside the glove box, which facilitates the work of the users.

Optionally, step e) comprises a sub-step of adjusting the height of the counter-electrode 32 in the second through-opening 31 so that the counter-electrode 32 contacts the liquid electrolyte.

If the test cell comprises a lateral through-opening 14 for hosting an auxiliary electrode 15, the method for the EQCM characterization comprises a step of introducing and positioning the auxiliary electrode 15 in channel 14. This step is carried on between step c) and e).

The present invention enables to perform EQCM measurements in hermetic conditions. The test cell offers electrochemical conditions similar to what is found in a real electrochemical system system (distance between electrodes, minimal quantity of electrolyte, hermeticity). Additionally, the modular design of the cell allows for performing measurements using different types of electrodes (resonators), different volumes of electrolytes, and with the possibility of having three electrodes configuration, optical access and dual resonator configuration.

## Claims

1. Test cell for the EQCM - Electrochemical Quartz Crystal Microbalance-characterization of an electrochemical system comprising a liquid electrolyte, **characterized in that** said test cell comprises:
- a cell body (10) comprising a first through-opening (11) extending through the cell body (10) along a predefined axis Z, said first through-opening (11) being intended to host the electrolyte, the cell body (10) comprising also a first electrode of the electrochemical system, called working electrode (13), and a quartz resonator (12) at an end of the first through-opening (11), the quartz resonator (12) being intended to support said working electrode (13), the quartz resonator (12) being configured for providing a signal function of a mass variation of the working electrode (13),
- a cell basis (20), configured to be assembled with the cell body (10) along axis Z, and comprising a laterally arranged connecting terminal (22), said connecting terminal (22) being electrically connectable to the quartz resonator (12) for receiving the signal from the quartz resonator (12),
- a cell hood (30), configured to be assembled with the cell body (10) along axis Z, comprising a second through-opening (31) extending through the cell hood (30) substantially along the axis Z, and a second electrode of the electrochemical system, called counter-electrode, said second through-opening (31) being intended to host the counter-electrode (32).

2. Test cell according to claim 1, wherein each of the cell body (10), the cell basis (20) and the cell hood (30) comprising a plurality of alignment elements (40, 41), the cell hood (30) and the cell basis (20) comprising an annular lip (23, 38) around a surface facing the cell body (10) in an assembled state, said alignment elements (40, 41) being configured so that the first through-opening (11) and the second through-opening (31) face each other when the cell body (10), the cell basis (20) and the cell hood (30) are in an assembled configuration, the cell body (10), the cell basis (20) and the cell hood (30) being configured be sealed one above the other by means of the alignment elements (40, 41) so as to avoid any leakage of the liquid electrolyte out from the first through-opening (11).

3. Test cell according to claim 2, wherein the alignment elements (40, 41) of the cell body (10) comprise a plurality of hollow pads (41) substantially along the axis Z on both sides of the cell body (10), the alignment elements (40, 41) of the cell basis (20) and the alignment elements (40, 41) of the cell hood (30) comprising holes (41), the hollow pads (41) and the holes (40) being configured to interlock with one another.

4. Test cell according to any of the preceding claims, wherein the cell body (10) comprises a recess (16) configured for hosting the quartz resonator (12), and comprising a mask (17), said quartz resonator (12) being maintained in the recess (16) by means of the mask (17), said mask (17) covering partially the surface of the recess (16) so as to leave an uncovered surface for establishing an electrical contact between the quartz resonator (12) and the connecting terminal (22) of the cell basis (20) through contact pins (21), said contacts pins (21) protruding out from the cell basis (20) along the axis Z.

5. Test cell according to any of the preceding claims, wherein at least one among the cell body (10), the cell basis (20) and the cell hood (30) comprises a material selected from a group comprising polyetherimide (PEI), polypropylene (PP), polyether ether ketone (PEEK), polytetrafluoroethylene (PTFE), aluminium and stainless steel.

6. Test cell according to any of the preceding claims, wherein the cell hood (30) comprises a light transparent window (34), said light transparent window (34) being positioned so as to illuminate the working electrode (13) with a light beam.

7. Test cell according to any of the preceding claims, comprising an auxiliary electrode (15), wherein a lateral through-opening (14) is arranged in a side wall of the cell body (10), said lateral through-opening (14) extending normally to the axis Z, and being configured to host said auxiliary electrode (15).

8. Test cell according to any of the preceding claims, comprising a threaded ferrule (33) configured to be screwed in the second through-opening (31), a sealing gasket being arranged in said threaded ferrule (33) so as to lock the displacement of the counter-electrode (32) by screwing the ferrule (33) in the second through-opening (31).

9. Test cell according to any of claims 1 to 7, wherein the cell hood (30) comprises a chimney (35) extending along axis Z, said chimney (35) and the second through-opening (31) being configured to host an aqueous electrolyte.

10. Test cell according to any of the preceding claims, wherein the cell body (10) is made of metal, the cell body (10) being connected to a temperature regulating device.

11. Test cell according any of the preceding claims, wherein the cell body (10), the cell basis (20) and the cell hood (30) have a square or a rectangular cross section along axis Z.

12. Test cell according to any of the preceding claims, comprising at least one O-ring-seal (50, 51, 52, 53), said O-ring-seal (50, 51, 52, 53) being arranged at an edge of the cell body (10) and/or cell basis (20) and/or cell hood (30), in a plane normal to axis Z.

13. Test cell according to claim 12, wherein the O-ring-seal (50, 51, 52, 53) comprises a material selected from a group comprising nitrile, polytetrafluoroethylene (PTFE) or perfluoro rubber.

14. Test cell according to any of claims 12 or 13, wherein a first O-ring-seal (50) is arranged so as so closely surround an extremal part of the first through-opening (11), opposite to the quartz resonator (12).

15. Test cell according to any of claims 12 to 14, wherein a second O-ring-seal (51) is arranged substantially on the inner circumference of an end surface of the cell basis (20), so that when the cell basis (20) and the cell body (10) are assembled, the second O-ring-seal (51) contacts the cell body (10).

16. Test cell according to any of claims 12 to 14 in combination with claim 4, wherein a third O-ring-seal (52) is interposed between the quartz resonator (12) and the mask (17).

17. Test cell according to any of claims 12 to 15, wherein a fourth O-ring-seal (53) is arranged around the working electrode (13).

18. EQCM system, comprising a test cell according to any of the preceding claims, a frequency counter connected to the connecting terminal (22), and a potentiostat configured for controlling and measuring the voltage difference between the counter-electrode (32) and the quartz resonator (12) supporting the working electrode (13).

19. Method for the EQCM - Electrochemical Quartz Crystal Microbalance-characterization of an electrochemical system by using the EQCM system according to claim 18, **characterized in that** said method comprises the following steps:
a) deposing the working electrode (13) on the quartz resonator (12);
b) placing the quartz resonator (12) and the working electrode (13) in the cell body (10);
c) assembling the cell body (10) and the cell basis (20);
d) introducing the liquid electrolyte in the first through-opening (11);
d) inserting the counter-electrode (32) in the second through-opening (31), then assembling the cell body (10) and the cell hood (30), or inversely;
e) controlling and measuring the voltage difference between the counter-electrode (32) and the working electrode (13), and measuring a signal function of a mass variation of the working electrode (13).

20. Method according to claim 19, wherein step e) comprises a sub-step of adjusting the height of the counter-electrode (32) in the second through-opening (31) so that the counter-electrode (32) contacts the liquid electrolyte.

21. Method according to any of claims 18 or 19 in combination with claim 7, comprising a step of introducing the auxiliary electrode (15) into the auxiliary channel (14), said step being executed between steps c) and d).
